# EUROPEAN PATENT APPLICATION

(11) **EP 4 470 888 A1**
(43) Date of publication of application: **04.12.2024**
(21) Application number: 24173513.3
(22) Date of filing: 30.04.2024
(51) Int. Cl.: B62D 43/08

(54) **VEHICLE WARNING SYSTEM FOR INCORRECTLY STOWED SPARE WHEEL**

(30) Priority: 18.05.2023 GB 202307445
(71) Applicant: Nissan Motor Manufacturing (UK) Ltd, Bedford Bedfordshire MK43 0DB (GB)
(72) Inventor: Barron, Peter, Cranfield, MK430DB (GB); Almond, Barry, Cranfield, MK430DB (GB)

(57) **Abstract**

Retaining arm (70) locates spare wheel (60) within a vehicle frunk (4). Frunk wall (4b) comprises a clip holder (65), comprising electrical contacts (11) connected to warning system (10). Detection circuit (12) connects to contacts (11) and indicates whether electrical current is flowing between them. Warning unit (13) is driven by the output state of detection circuit (12). A visual (14) and/or audible (15) warning may be provided to the driver. When the spare wheel (60) is unloaded, retaining arm (70) may be inserted into clip holder (65); retaining arm pin (81) connects contacts (11) to illuminate light (14), indicating that the spare wheel is not stowed securely. When the wheel is stowed securely, clip (80) grips an upper surface of wheel (60), and light (14) is extinguished. sdfbvRetaining arm (70) locates spare wheel (60) within a vehicle frunk (4). Frunk wall (4b) comprises a clip holder (65), comprising electrical contacts (11) connected to warning system (10). Detection circuit (12) connects to contacts (11) and indicates whether electrical current is flowing between them. Warning unit (13) is driven by the output state of detection circuit (12). A visual (14) and/or audible (15) warning may be provided to the driver. When the spare wheel (60) is unloaded, retaining arm (70) may be inserted into clip holder (65); retaining arm pin (81) connects contacts (11) to illuminate light (14), indicating that the spare wheel is not stowed securely. When the wheel is stowed securely, clip (80) grips an upper surface of wheel (60), and light (14) is extinguished.

## Description

### Technical Field of the Invention

The present invention relates to warning systems for vehicles such as automotive vehicles. In particular, the present invention relates to warning systems operable to alert vehicle users to an incorrectly stowed spare wheel.

### Background to the Invention

Automotive vehicles are often supplied with spare wheels. The spare wheel may be provided in a correspondingly sized and shaped compartment under a floor panel in a trunk. Vehicles powered by an electric motor rather than an internal combustion engine (ICE) may be provided with additional storage space in front of the passenger compartment (commonly referred to as a frunk). The frunk may be used for storage of a spare wheel. This can improve accessibility of the wheel for a vehicle user, especially if it is not stowed behind a panel or the like.

In the absence of a dedicated compartment or panel, the spare wheel is typically secured in position by use of a mounting bracket. The bracket holds the wheel in position, preventing relative motion between the wheel and the vehicle interior under acceleration or deceleration. This can prevent damage to the wheel or to the vehicle resulting from such movement. As with any bracket, it is possible that a user may forget to secure the wheel to the bracket; or may not correctly secure the wheel to the bracket. In many such instances, the incorrect engagement of the wheel and bracket is not immediately clear to at least a subset of users on casual visual inspection.

Furthermore in the prior art, there is often no warning system for an item such as a spare wheel not being present and secured in its storage location.

It is therefore an object of the present invention to provide a warning system for a vehicle that at least partially overcomes or alleviates the above issues.

### Summary of the Invention

According to a first aspect of the present invention, there is provided a stowed item warning system for a vehicle, the system comprising: a retaining arm for retaining a spare wheel; a clip holder; a set of electrical contacts, said electrical contacts being movable between engaged and disengaged positions, wherein the electrical contacts are moved between said positions by insertion or removal of said retaining arm from the clip holder; a detection circuit connected to the electrical contacts, the detection circuit having an output state indicative of the position of the electrical contacts; and a warning unit operable to output an alarm in response to the output state of the detection circuit; wherein in use, the alarm is dedicated to the warning system, and is not shared with any other vehicle alarm function; and wherein the alarm only operates in use when a vehicle ignition switch in an IC engine vehicle, or a vehicle power switch in an electric vehicle, is in an "On" position.

The system according to the present invention can readily alert a vehicle user when the spare wheel is incorrectly stowed; or missing (possibly left behind). This allows the vehicle user to correctly stow the spare wheel before it can come loose during transit; and therefore can potentially be damaged, or cause damage to other vehicle components.

The set of electrical contacts may comprise a pair of electrical contacts. When the electrical contacts are in the engaged position, an electrical current flows between the contacts; and when the electrical contacts are in the disengaged position, electrical current does not flow between the contacts.

The retaining arm for the spare wheel comprises an electrically conductive member. The electrically conductive member abuts each electrical contact when the retaining arm is stowed out of use, and therefore does not retain the spare wheel. In such cases, an electrical current will flow between the contacts through the electrically conductive member of the retaining arm.

The detector circuit may comprise a power source. In some embodiments, the detector circuit may additionally comprise current/voltage measuring features and/or a logic gate.

The current and/or voltage supplied to the electrical contacts may be low. This can reduce the prospect of a vehicle user suffering a noticeable electrical shock. In this context, low current may be less than, say, 3 amps. In this context, low voltage may be less than, say, 14V, being a typical peak alternator output where an internal combustion engine is used and the nominal battery voltage is 12V.

The electrical contacts will be moved to the engaged position by inserting the retaining arm into the clip holder, indicating that the spare wheel is not properly retained. Hence, the warning indicator will be activated to output an alarm when the detection circuit output state indicates that the electrical contacts are in the engaged position. (To save irritation to occupants and flattening of the vehicle battery, the alarm is only activated when the vehicle is powered up - "ignition on" for an ICE-powered vehicle, "power on" for an electric vehicle.) In some such embodiments, the electrical contacts may be biased to the disengaged position.

The electrical contacts may be fitted to a clip holder on a frunk wall. The conductive elements may be fixed to the clip holder by fixing means. In such cases, suitable fixing means include - but not are limited - to adhesive, clips, bolts or the like. The electrical contacts may be provided on electrically conductive parts of the clip holder. If the clip holder is formed from an electrically conductive material, such as a metal, this has the benefit that there is no need to fix additional conductive elements to the clip holder.

The clip holder may comprise one or more arms. The or each arm may be adapted to retain, hold or grasp at least part of the spare wheel retaining arm. The or each arm may comprise part of a clasp, clip, catch, hook, loop or the like.

The clip holder arms may be biased to an open position where the arms are spaced apart. In some embodiments where the clip holder comprises a pair of arms, one electrical contact may be fitted to each arm. In some embodiments, the electrical contacts may be provided in a contact switch. In such embodiments, the switch may be provided on a surface of the clip holder adapted to abut or support the item when stowed. Suitable contact switches include but are not limited to push switches, plunger switches, pressure pads or the like. Non-contact switches such as reed or other magnetic switches, optical or infrared sensors could be used where appropriate.

The alarm may be a visible and/or audible alarm. As necessary, the warning unit may comprise a visual alarm unit and/or an audio alarm unit. Additionally or alternatively, the warning unit may comprise a connection to a visual alarm unit and/or an audio alarm unit.

The visual alarm unit may comprise an indicator light. In such embodiments, the visible alarm may comprise illumination of the indicator light. The indicator light can be provided on the dashboard of the vehicle and/or elsewhere on an internal control console and/or adjacent to the item stowage position. Additionally or alternatively, the visual alarm unit may comprise a vehicle display screen. In such embodiments, the visible alarm may comprise display of an icon and/or text on the vehicle display screen. The icon and/or text may correspond to the spare wheel. Such a screen may be provided on the vehicle dashboard or elsewhere on an internal control console.

The audio alarm may comprise a tone, tone sequence, or speech sample output via a loudspeaker. The sampled speech may correspond to the specific item. The loudspeaker may be a dedicated alarm loudspeaker provided on the dashboard of the vehicle and/or on an internal control console and/or adjacent to the item stowage position. Alternatively, the loudspeaker may be a loudspeaker of a vehicle audio system.

According to a second aspect of the present invention, there is provided a vehicle comprising a stowed item warning system according to the first aspect of the present invention.

The vehicle of the second aspect of the present invention may incorporate any or all features of the first aspect of the present invention as desired or appropriate.

The vehicle may be an electric vehicle.

### Detailed Description of the Invention

In order that the invention may be more clearly understood, one or more embodiments thereof will now be described - by way of example only - with reference to the accompanying drawings, of which:
- Figure 1: is a schematic illustration of a vehicle indicating potential locations for stowing items;
- Figure 2: is a schematic illustration of a bracket, which is not part of the present invention;
- Figure 3: is a schematic block diagram of a warning system according to the present invention;

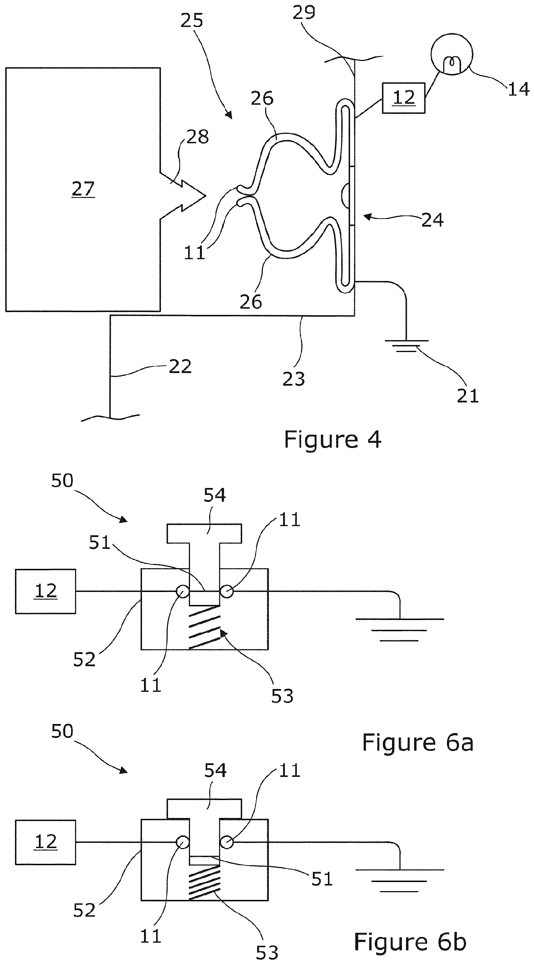

- Figure 4: is a schematic illustration of a particular embodiment of a warning system which is not part of the present invention;

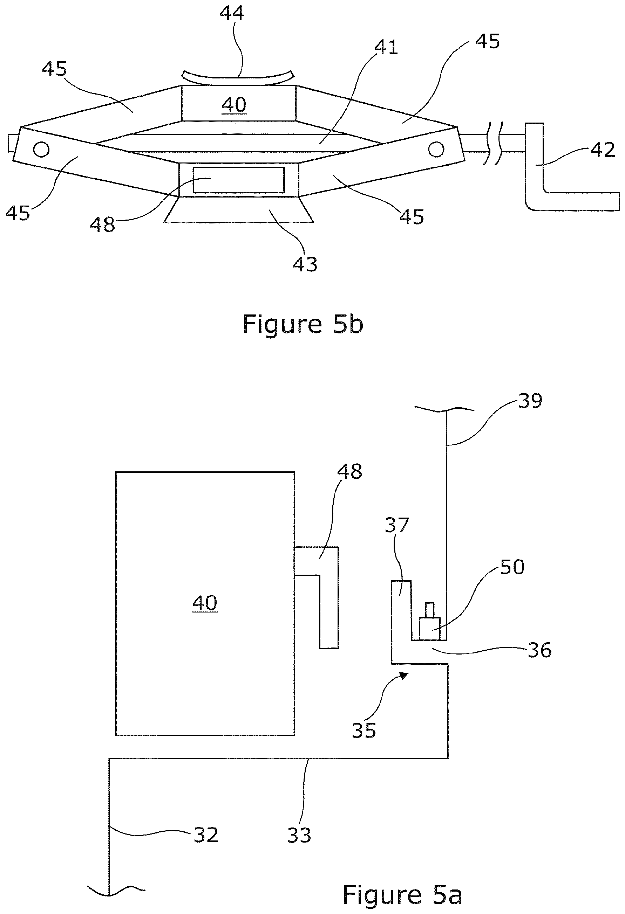

- Figure 5: is a schematic illustration of a warning system which is not part of the present invention;
- Figure 6: is a schematic illustration of a plunger switch which is not part of the present invention;
- Figure 7a: is a schematic illustration of a spare wheel for a vehicle stowed in a frunk;
- Figure 7b: is a schematic illustration of a retaining arm for use in stowing a spare wheel of a vehicle in a frunk;
- Figure 7c: is a schematic illustration of the use of the retaining arm of Figure 7b to stow the spare wheel in Figure 7a;
- Figure 7d: is a schematic illustration of a clip holder for receiving and retaining a clip of the retaining arm; and
- Figure 7e: is a schematic illustration of the clip of the retaining arm.

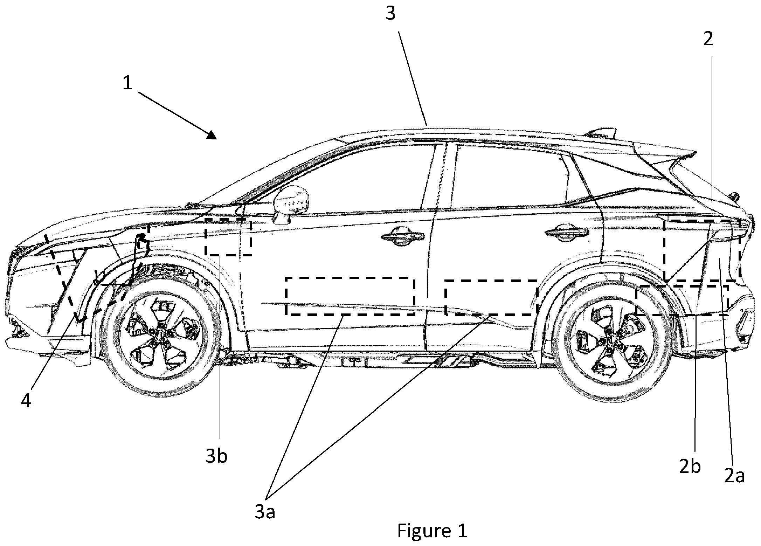

Vehicle spare wheels may be stowed in vehicle trunks 2 or in frunks 4 (Figure 1). This Figure also shows a vehicle passenger compartment 3. Within the vehicle 1, various useful items can be provided at various locations. Within the passenger compartment 3, these include but are not limited to the door panels 3a and valuables compartment or "glove box" 3b. Within the trunk 2, these include but are not limited to compartments behind or within side trim panels (2a) and in/under a luggage board (2b). Especially in electric vehicles, items could be stowed in the frunk 4. Traditionally, such items might be stored in a dedicated area such as a compartment for a spare wheel under a floor panel of the vehicle trunk. If the compartment is designed to tightly fit the item, then not only is the item securely held when the vehicle is in motion; but whether or not the compartment lid closes provides a user with ready feedback as to whether the item is correctly stowed. It is beneficial for spare wheels to be readily visible and accessible; particularly if it is desired to have rapid access thereto without prior removal of luggage.

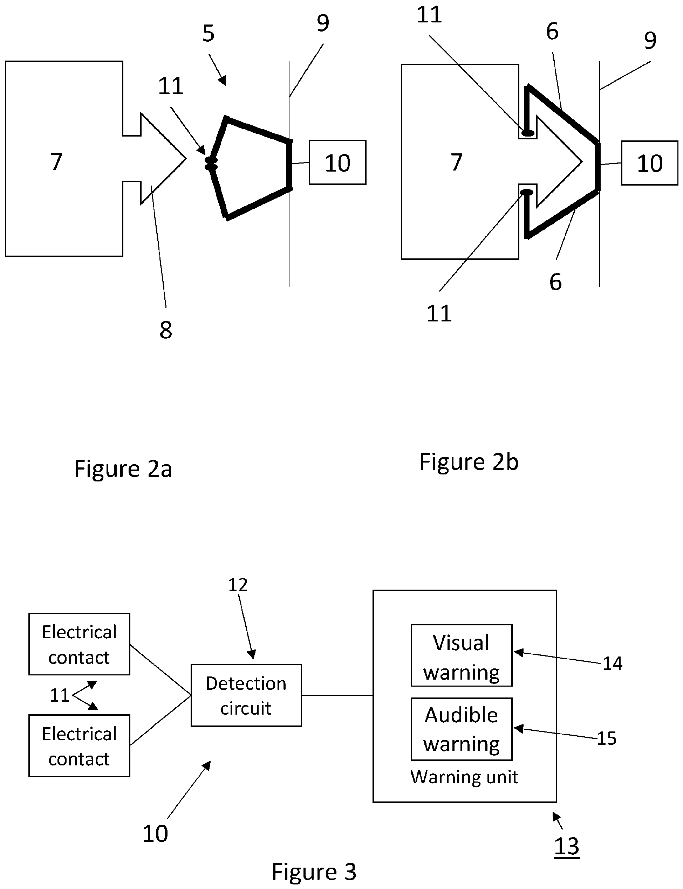

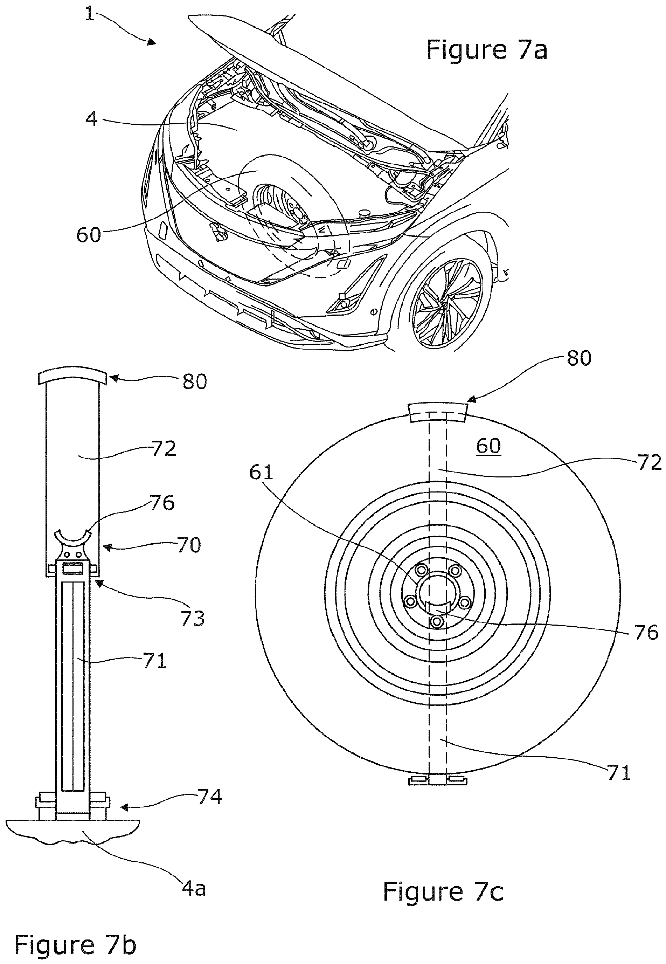

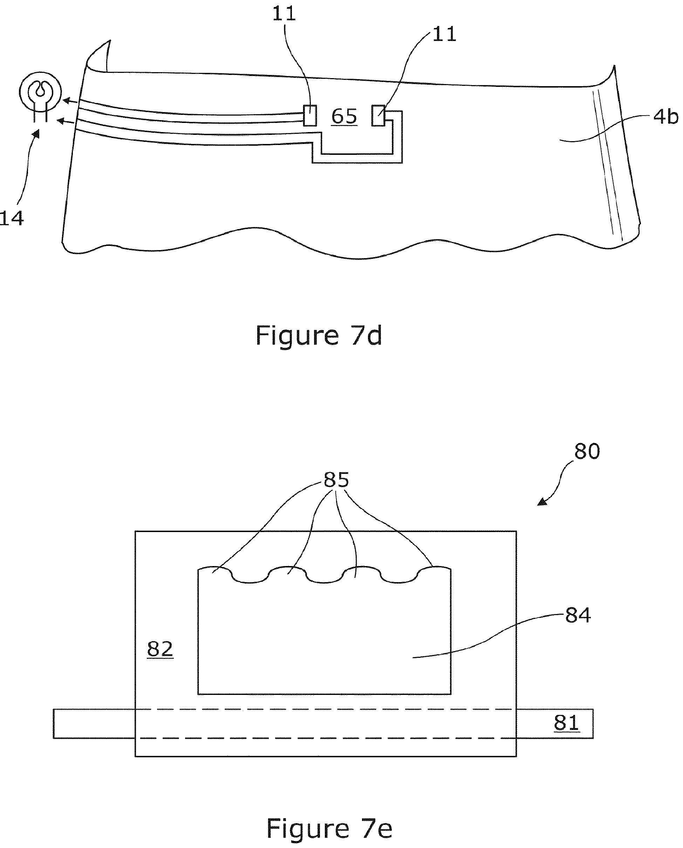

In the present invention, as is illustrated schematically in Figure 3, a warning system 10 is provided, the warning system being operable to provide an alarm if a clip (80, Figs. 7b, 7c) is stowed in a clip holder (65, Fig. 7d; this implies that the spare wheel is missing, or is incorrectly stowed). In order to implement the warning system 10, the clip holder 65 is provided with a pair of electrical contacts 11, one contact at the tip of each arm.

A detection circuit (12, Fig. 3) is connected to the electrical contacts 11. The detection circuit 12 has an output state indicative of the position of the electrical contacts 11. For example, the detection circuit 12 is operable to output a signal indicative of whether an electrical current is flowing between the electrical contacts 11. In some examples, the detection circuit may comprise a power source.

A warning unit 13 is connected to and operable in response to the output state of the detection circuit 12. Based on the output state of the detection circuit 12, the warning unit 13 can output an alarm. Typically, the alarm might be a visible alarm output via a visual alarm unit 14. Optionally, the alarm may be an audible alarm output via an audio alarm unit 15.

The visual alarm unit 14 can be a warning lamp within the vehicle. The lamp can be provided in the vicinity of the spare wheel and/or the lamp can be provided on a warning panel of the vehicle dashboard alongside other such warning lamps. In a vehicle 1 fitted with one or more display screens, one display screen can function as the visual alarm unit 14. In such examples, the display screen may display constantly or intermittently an icon corresponding to the spare wheel. Additionally or alternatively, the display screen may display text identifying the spare wheel and/or text/image outlining the action required to remedy the incorrect stowage. Such additional information may optionally be displayed in response to user input.

The audio alarm unit 15 can be a dedicated loudspeaker within the vehicle 1. The loudspeaker can be provided in the vicinity of the stowed item and/or the loudspeaker can be provided in the passenger compartment 3. In a vehicle fitted with an audio system, the audio system can function as the audio alarm unit 15. The audio alarm can comprise a constant or intermittent tone or series of tones. Additionally or alternatively, the audio alarm can comprise sampled speech identifying the item (being the spare wheel) and/or outlining the action required to remedy the incorrect stowage. Such additional information may optionally be output in response to user input.

Turning to Figure 7, an embodiment of the present invention is illustrated. In this instance, the warning system 10 is operable to monitor whether a retaining arm 70 for a spare wheel 60 stowed in the frunk 4 (illustrated schematically in Figure 7a) is retained in a bracket in the form of a clip holder (65, Fig. 7d) provided on an internal wall 4b of frunk 4.

As shown in Figure 7b, the retaining arm 70 comprises an elastic portion 71 and a rigid portion 72. At the joint of the elastic and rigid portions 71, 72 is provided an engagement element 73. The elastic portion is fixed to a floor 4a of frunk 4 by means of an anchoring bar 74. The engagement element 73 is provided with a hook 76 to engage a central bore 61 of spare wheel 60 (see Figure 7c). A clip 80 is provided at the distal end of rigid portion 72.

As illustrated in Figure 7e, the clip 80 is connected to the rigid portion 72 via pivot pin 81, allowing a bridge section 82 of the clip 80 to rotate relative to the rigid portion about said pin 81. The bridge section 82 can have a lower surface configured in use to grip an upper surface of the spare wheel 60.

The bridge section 82 of the clip 80 has an aperture 84 extending therethrough. Finger grip portions 85 are formed into the aperture 84 to allow a user to easily grip the clip 80. The pin 81 allows a user to pivot the bridge section 82 relative to the rigid portion 72.

In normal stowed use, the retaining arm 70 is manipulated to allow the hook 76 of the engagement element 73 to engage with the central bore 61 of the spare wheel 60; and the bridge 82 of clip 80 is pivoted to lie over the outer surface of spare wheel 60, as illustrated in Figure 7c. To allow the spare wheel 60 to be unloaded or loaded, the retaining arm 70 is disengaged from the spare wheel 60. During these times, clip 80 can be inserted into a clip holder 65 so that it does not impede unloading or loading.

As shown in Figure 7d, clip holder 65 comprises a pair of electrical contacts 11. The electrical contacts 11 are spaced apart, and are spring biased inwardly relative to one another. By selecting the spacing and bias force of the contacts 11 appropriately, the contacts can receive and retain therebetween the pivot pin 81. Where the pivot pin 81 is formed from an electrically conducting material, pivot pin 81 can thereby enable a current to pass between the contacts 11. As a result of current flowing between the contacts a linked warning unit, for example indicator lamp 14 in Figure 7d, can be activated as described above.

In this manner, a vehicle user can be alerted to the fact that retaining arm 70 has not been engaged with the spare wheel 60 if arm 70 is still retained by clip holder 65. This can therefore alert the vehicle user to a potentially unsecured or missing spare wheel 60.

The one or more embodiments are described above by way of example only. Many variations are possible without departing from the scope of protection afforded by the appended claims.

## Claims

1. A stowed item warning system (10) for a vehicle (1),
**characterized in that**:
the system comprises: a retaining arm (70) for retaining a spare wheel (60); a clip holder (65); a set of electrical contacts (11), said electrical contacts being movable between engaged and disengaged positions, wherein the electrical contacts are moved between said positions by insertion or removal of said retaining arm (70) from the clip holder (65); a detection circuit (12) connected to the electrical contacts (11), the detection circuit having an output state indicative of the position of the electrical contacts; and a warning unit (13) operable to output an alarm in response to the output state of the detection circuit (12); wherein in use, the alarm is dedicated to the warning system, and is not shared with any other vehicle alarm function; and wherein the alarm only operates in use when a vehicle ignition switch in an IC engine vehicle, or a vehicle power switch in an electric vehicle, is in an "On" position.

2. A warning system (10) according to claim 1, wherein when the electrical contacts (11) are in the engaged position, an electrical current flows between the contacts; and when the electrical contacts (11) are in the disengaged position, electrical current does not flow between the contacts.

3. A warning system (10) according to claim 1 or claim 2, wherein the electrical contacts (11) abut a pivot pin (81) on the retaining arm (70) when in the engaged position; and the electrical contacts (11) are spaced apart from one another when in the disengaged position.

4. A warning system (10) according to claim 3, wherein the pivot pin (81) comprises an electrically conductive member and the electrically conductive member abuts each electrical contact (11) in the clip holder (65) when the retaining arm (70) is stowed in a temporary storage position while the spare wheel (60) is not in a storage position.

5. A warning system (10) according to any preceding claim, wherein the electrical contacts (11) will be moved to the engaged position by inserting the retaining arm (70) into the clip holder (65).

6. A warning system (10) according to claim 5, wherein the electrical contacts (11) are biased to the disengaged position.

7. A warning system (10) according to any preceding claim, wherein the electrical contacts (11) are fitted to different sides of the clip holder (65).

8. A warning system (10) according to any preceding claim, wherein the electrical contacts (11) are connected to the detection circuit (12) by way of one or more conductive elements.

9. A warning system (10) according to any one of claims 1 to 8, wherein the electrical contacts (11) are provided on electrically conductive parts of the clip holder (65).

10. A warning system (10) according to any preceding claim, wherein the clip holder (65) comprises one or more electrical contacts (11), each contact being adapted to retain, hold or grasp the retaining arm (70) to be stowed; or at least a part of the retaining arm to be stowed.

11. A warning system (10) according to any preceding claim, wherein the warning unit (13) comprises a visual alarm unit (14) and/or an audio alarm unit (15); or wherein the warning unit (13) comprises a connection to a visual alarm unit (14) and/or an audio alarm unit (15).

12. A warning system (10) according to claim 11, wherein the visual alarm unit (14) comprises an indicator light.

13. A warning system (10) according to claim 11 or claim 12, wherein the visual alarm unit (14) comprises a vehicle display screen and the visible alarm comprises display of an icon and/or text on the vehicle display screen.

14. A warning system (10) according to any one of claims 11 to 13, wherein the audio alarm unit (15) comprises a loudspeaker and the audio alarm comprises a tone, tone sequence or speech sample.

15. A vehicle (1) comprising a stowed item warning system (10) according to any preceding claim.
